# EUROPEAN PATENT APPLICATION

(11) **EP 4 601 361 A1**
(43) Date of publication of application: **13.08.2025**
(21) Application number: 23874324.9
(22) Date of filing: 07.10.2023
(51) Int. Cl.: H04W 36/00

(54) **INFORMATION PROCESSING METHOD AND APPARATUS, AND COMMUNICATION DEVICE AND STORAGE MEDIUM**

(30) Priority: 08.10.2022 CN 202211223047
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LIU, Xiaoman, Beijing 100032 (CN); TANG, Xiaoxuan, Beijing 100032 (CN)
(74) Representative: Maiwald GmbH
(86) International application number: PCT/CN2023/123208
(87) International publication number: WO 2024/074132

(57) **Abstract**

Disclosed in the embodiments of the present disclosure are an information processing method and apparatus, and a communication device and a storage medium. The method comprises: a first network device receiving first information and/or second information, which is sent by one or more second network devices, wherein the first information comprises first configuration information related to conditional handover (CHO), and the second information comprises second configuration information related to conditional primary-secondary cell addition/change (CPAC); and the first network device sending the first configuration information and/or the second configuration information to a terminal, or sending, to the terminal, third configuration information, which is obtained after processing of the first configuration information and/or the second configuration information.

## Description

### CROSS REFERENCE TO RELATED APPLICATIONS

This application claims priority to Chinese patent application No. 202211223047.5, filed on October 8, 2022, the entire contents of which are incorporated herein by reference.

### TECHNICAL FIELD

The disclosure relates to the field of communication technology, in particular to an information processing method, an information processing apparatus, a communication device and a storage medium.

### BACKGROUND

Currently, a network supports configuring a conditional handover (CHO) or conditional primary secondary cell (PScell) addition/change (CPAC) mechanism for a user equipment (UE). The related scheme supports carrying a CPAC configuration in the CHO, i.e., when or after completing a CHO-based handover, the UE initiates a conditional addition of a secondary node (SN) based on the CPAC configuration provided by the network, to receive services of the network by means of dual connectivity (DC). In the CHO, the network may configure up to eight candidate target cells for the UE, and each target cell is configured with a maximum of eight candidate SNs. Regardless of CHO or CPAC, it needs to configure a corresponding measurement for the UE to determine whether an execution condition is met. Therefore, it is easy to exceed a measurement capability of the UE, and there is currently no effective solution to solve this problem.

### SUMMARY

In order to solve the existing technical problem, embodiments of the disclosure provide an information processing method, an information processing apparatus, a communication device and a storage medium.

In order to achieve the above purpose, the technical solution of embodiments of the disclosure is implemented as follows.

According to a first aspect of embodiments of the disclosure, an information processing method is provided. The method includes:
receiving, by a first network device, first information and/or second information sent by one or more second network devices, in which the first information includes first configuration information related to CHO, and the second information includes second configuration information related to CPAC; and
sending, by the first network device, the first configuration information and/or the second configuration information to a terminal, or third configuration information obtained after processing the first configuration information and/or the second configuration information to the terminal.

In the above solution, the method further includes: sending, by the first network device, a first request to the one or more second network devices, in which the first request is used for requesting configuration information related to the CHO and/or the CPAC.

In the above solution, the first request further includes at least one of:
indication information indicating whether the second network device can configure the CPAC;
measurement capability information of the terminal;
available measurement capability information of the terminal for the second network device; or
at least part of measurement results of the terminal.

In the above solution, in a case where the first request includes the indication information indicating whether the second network device can configure the CPAC, and the indication information indicates that the second network device cannot configure the CPAC, or in a case where the first request does not include the indication information indicating whether the second network device can configure the CPAC, the method further includes:
receiving, by the first network device, a second request sent by the second network device, in which the second request is used to request to configure the CPAC.

In the above solution, the second request further includes the second configuration information.

In the above solution, the second request includes first indication information, and the first indication information is used to indicate that the second request includes the second configuration information.

In the above solution, receiving, by the first network device, the second request sent by the second network device includes: receiving, by the first network device, a first response corresponding to the first request sent by the second network device, in which the first response includes the second request.

In the above solution, the method further includes: sending, by the first network device, fourth information to the second network device, in which the fourth information is used to acknowledge the second request.

In the above solution, the fourth information includes at least one of:
indication information indicating whether the second network device can configure the CPAC;
measurement capability information of the terminal;
measurement capability information of the terminal for CHO candidate cells and/or measurement capability information of the terminal for CPAC candidate cells; or
at least part of measurement results of the terminal.

In the above solution, the second configuration information includes at least one of:
a CPAC candidate cell list;
measurement configuration information related to the CPAC candidate cells;
an access resource corresponding to the CPAC candidate cells; or
an execution condition related to the CPAC candidate cells.

In the above solution, the method further includes: sending, by the first network device, a first notification to the second network device in a case where the first network device processes the second configuration information.

In the above solution, the method further includes: sending, by the first network device, fifth information to the terminal, in which the fifth information includes measurement priority information.

In the above solution, the method further includes: receiving, by the first network device, sixth information sent by the terminal, in which the sixth information includes candidate cell information to be measured and/or reserved which is determined by the terminal, and the candidate cell information includes CHO candidate cell information and/or CPAC candidate cell information; and
sending, by the first network device, a second notification to a corresponding second network device or a third notification to a corresponding third network device based on the sixth information, in which the second network device is a network device corresponding to the CHO candidate cell information and/or the CPAC candidate cell information, the third network device is a network device corresponding to the CPAC candidate cell information, the second notification includes the CHO candidate cell information and/or the CPAC candidate cell information, and the third notification includes the CPAC candidate cell information.

According to a second aspect of embodiments of the disclosure, an information processing method is provided. The method includes:
sending, by a second network device, first information and/or second information to a first network device, in which the first information includes first configuration information related to CHO, the second information includes second configuration information related to CPAC, and at least part of information among the first configuration information and/or the second configuration information is used to be configured for a terminal by the first network device.

In the above solution, the method further includes: receiving, by the second network device, a first request sent by the first network device, in which the first request is used to request configuration information related to the CHO and/or the CPAC.

In the above solution, the first request includes at least one of:
indication information indicating whether the second network device can configure the CPAC;
measurement capability information of the terminal;
available measurement capability information of the terminal for the second network device; or
at least part of measurement results of the terminal.

In the above solution, in a case where the first request includes the indication information indicating whether the second network device can configure the CPAC, and the indication information indicates that the second network device cannot configure the CPAC, or in a case where the first request does not include the indication information indicating whether the second network device can configure the CPAC, the method further includes:
sending, by the second network device, a second request to the first network device, in which the second request is used to request to configure the CPAC.

In the above solution, the second request further includes the second configuration information.

In the above solution, the second request includes first indication information, and the first indication information is used to indicate that the second request includes the second configuration information.

In the above solution, sending, by the second network device, the second request to the first network device includes:
sending, by the second network device, a first response corresponding to the first request to the first network device, in which the first response includes the second request.

In the above solution, the method further includes: receiving, by the second network device, fourth information sent by the first network device, in which the fourth information is used to acknowledge the second request.

In the above solution, the fourth information includes at least one of:
indication information indicating whether the second network device can configure the CPAC;
measurement capability information of the terminal;
measurement capability information of the terminal for CHO candidate cells and/or measurement capability information of the terminal for CPAC candidate cells; or
at least part of measurement results of the terminal.

In the above solution, the second configuration information includes at least one of:
a CPAC candidate cell list;
measurement configuration information related to the CPAC candidate cells;
an access resource corresponding to the CPAC candidate cells; or
an execution condition related to the CPAC candidate cells.

In the above solution, the method further includes: receiving, the second network device, a first notification sent by the first network device, in which the first notification is used to inform that the first network device has processed the second configuration information.

In the above solution, the method further includes: receiving, by the second network device, a second notification sent by the first network device, in which the second notification includes CHO candidate cell information and/or CPAC candidate cell information, the CHO candidate cell information and/or the CPAC candidate cell information represent candidate cell information to be measured and/or reserved which is determined by the terminal.

In the above solution, the method further includes: sending, by the second network device, a fourth notification to a third network device, in which the fourth notification includes the CPAC candidate cell information, and the third network device is a network device corresponding to the CPAC candidate cell information.

According to a third aspect of embodiments of the disclosure, an information processing method is provided. The method includes:
receiving, by a terminal, first configuration information related to CHO and/or second configuration information related to CPAC sent by a first network device, or third configuration information obtained after processing the first configuration information and/or the second configuration information which is sent by the first network device; and
performing, by the terminal, cell measurement based on the first configuration information and/or the second configuration information, or based on the third configuration information.

In the above solution, performing, by the terminal, the cell measurement based on the first configuration information and/or the second configuration information, or based on the third configuration information includes:
determining, by the terminal, a measurement priority, and performing, by the terminal, the cell measurement based on the measurement priority and configuration information, in which the configuration information includes the first configuration information and/or the second configuration information, or the configuration information includes the third configuration information.

In the above solution, determining, by the terminal, the measurement priority includes: receiving, by the terminal, fifth information sent by the first network device, in which the fifth information includes measurement priority information; or,
determining, by the terminal, the measurement priority in a predefined manner.

In the above solution, the second configuration information includes at least one of:
a CPAC candidate cell list;
measurement configuration information related to the CPAC candidate cells;
an access resource corresponding to the CPAC candidate cells; or
an execution condition related to the CPAC candidate cells.

In the above solution, the method further includes: in a case where the terminal determines that the configuration information exceeds a capability of the terminal, reducing and/or integrating, by the terminal, candidate cells related to the configuration information, and determining, by the terminal, candidate cell information to be measured and/or reserved, in which the configuration information includes the first configuration information and/or the second configuration information, or the configuration information includes the third configuration information; and
sending, by the terminal, sixth information to the first network device, in which the sixth information includes the candidate cell information to be measured and/or reserved which is determined by the terminal, and the candidate cell information includes CHO candidate cell information and/or CPAC candidate cell information.

According to a fourth aspect of embodiments of the disclosure, an information processing apparatus is provided. The apparatus is configured in a first network device, and includes a first communication module and a second communication module, in which,
the first communication module is configured to receive first information and/or second information sent by one or more second network devices, in which the first information includes first configuration information related to CHO, and the second information includes second configuration information related to CPAC; and
the second communication module is configured to send the first configuration information and/or the second configuration information to a terminal, or third configuration information obtained after processing the first configuration information and/or the second configuration information to the terminal.

According to a fifth aspect of embodiments of the disclosure, an information processing apparatus is provided. The apparatus is configured ina second network device, and includes: a third communication module, configured to send first information and/or second information to a first network device, in which the first information includes first configuration information related to CHO, the second information includes second configuration information related to CPAC, and at least part of information among the first configuration information and/or the second configuration information is used to be configured for a terminal by the first network device.

According to a sixth aspect of embodiments of the disclosure, an information processing apparatus is provided. The apparatus is configured in a terminal, and includes a fourth communication module and a measurement module, in which,
the fourth communication module is configured to receive first configuration information related to CHO and/or second configuration information related to CPAC sent by a first network device, or third configuration information obtained after processing the first configuration information and/or the second configuration information which is sent by the first network device; and
the measurement module is configured to perform cell measurement based on the first configuration information and/or the second configuration information, or based on the third configuration information.

According to a seventh aspect of embodiments of the disclosure, a computer-readable storage medium on which a computer program is stored is provided. When the program is executed by a processor, steps of the information processing method as described in the first aspect, the second aspect or the third aspect of embodiments of the disclosure are implemented.

According to an eighth aspect of embodiments of the disclosure, a communication device is provided. The communication device includes: a memory, a processor, and a computer program stored on the memory and executable by the processor. When the processor executes the program, steps of the information processing method as described in the first aspect, the second aspect or the third aspect of embodiments of the disclosure are implemented.

According to the information processing method, the information processing apparatus, the communication device and the storage medium provided in embodiments of the present disclosure, the method includes: receiving, by the first network device, the first information and/or the second information sent by one or more second network devices, in which the first information includes the first configuration information related to CHO, and the second information includes the second configuration information related to CPAC, and sending, by the first network device, the first configuration information and/or the second configuration information to the terminal, or the third configuration information obtained after processing the first configuration information and/or the second configuration information to the terminal.

### BRIEF DESCRIPTION OF THE DRAWINGS

FIG. 1 is a flowchart 1 of an information processing method according to an embodiment of the disclosure.
FIG. 2 is a flowchart 2 of an information processing method according to an embodiment of the disclosure.
FIG. 3 is a flowchart 3 of an information processing method according to an embodiment of the disclosure.
FIG. 4 is a schematic diagram 1 of a formation structure of an information processing apparatus according to an embodiment of the disclosure.
FIG. 5 is a schematic diagram 2 of a formation structure of an information processing apparatus according to an embodiment of the disclosure.
FIG. 6 is a schematic diagram 3 of a formation structure of an information processing apparatus according to an embodiment of the disclosure.
FIG. 7 is a schematic diagram of a hardware formation structure of a communication device according to an embodiment of the disclosure.

### DETAILED DESCRIPTION

Further detailed explanations of the disclosure will be provided below in combination with the accompanying drawings and specific embodiments.

The technical solution of embodiments of the disclosure can be applied to various communication systems, such as a global system of mobile communication (GSM) system, a long term evolution (LTE) system or a 5G system. Optionally, the 5G system or the 5G network may also be called as a new radio (NR) system or a NR network.

For example, a communication system to which embodiments of the disclosure is applied may include a network device and a terminal device (also referred to as a terminal, communication terminal, etc.). The network device may be a device that communicates with the terminal device. The network device provides a communication coverage within a range of a certain region and can communicate with terminals in the region. Optionally, the network device may be a base station in various communication systems, such as an evolutional Node B (eNB) in the LTE system, or a base station (gNB) in the 5G system or the NR system.

It should be understood that devices with communication functions in the network/system in embodiments of the disclosure may be called as communication devices. The communication devices may include a network device and a terminal with communication functions, which may be specific devices as described above, and will not be repeated herein. The communication devices may also include other devices in the communication system, such as a network controller, a mobility management entity and other network entities, which are not limited in embodiments of the disclosure.

It should be understood that terms "system" and "network" in the disclosure are often used interchangeably. In the disclosure, the term "and/or" is only used for describing an association relationship of associated objects, which may indicate three kinds of relationships. For example, "A and/or B" may indicate that A exists alone, A and B both exist, or B exists alone. In addition, the character "/" in the disclosure generally indicates that the associated objects before and after the character has an "or" relationship.

The terms "first" and "second" in the specification and claims of the disclosure are used to distinguish similar objects, and are not necessarily used to describe a specific order or sequence. It should be understood that data thus used can be interchanged under appropriate circumstances, so that embodiments of the disclosure as described herein can be implemented, for example, in orders other than those illustrated or described herein. Furthermore, the terms "including" and "comprising" and any variations thereof are intended to cover non-exclusive inclusions. For example, a process, a method, a system, a product or an equipment that includes a series of steps or units is not necessarily limited to those explicitly listed, but may include other steps or units not explicitly listed or inherent to such process, method, product or equipment.

Before describing the technical solutions of embodiments of the disclosure in detail, CHO and CPAC will be briefly described first.

In order to solve a problem that a UE cannot normally complete a handover process due to sudden deteriorates (especially high frequency) of a channel between the UE and a serving cell, a base station may configure the UE to trigger a measurement report at a lower threshold. A handover (HO) command carries a higher threshold for triggering the handover, and may also carry a random access resource of the UE used by a target cell. Once meeting a handover threshold, the UE initiates a random access procedure to a target base station.

Similarly, the CPAC means that a master node (MN) or a secondary node (SN) sends a PScell addition/change condition to the terminal in advance. When measuring that a target PScell meets a condition, the terminal spontaneously performs a PScell addition/change procedure.

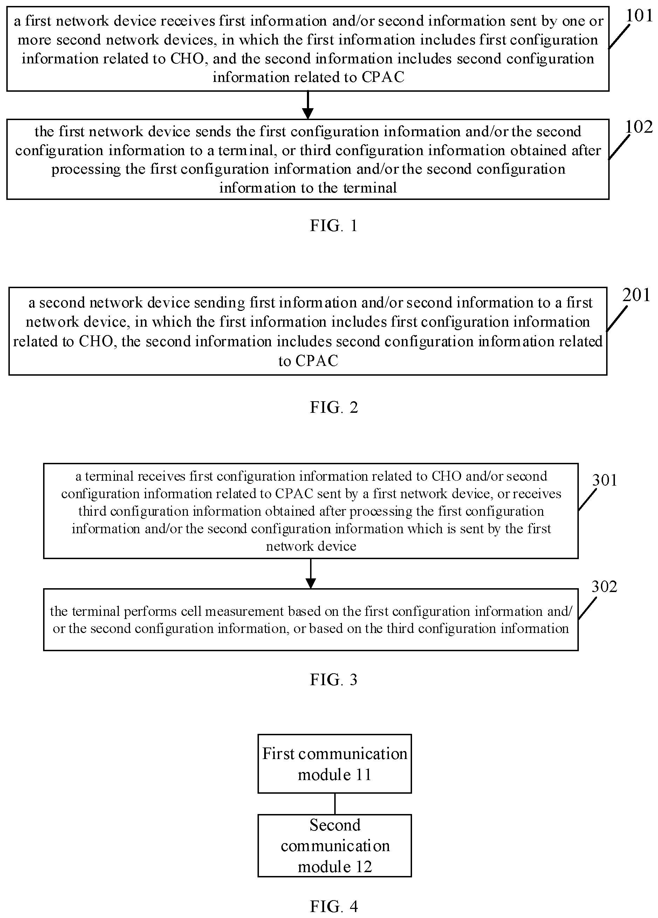

An embodiment of the disclosure provides an information processing method. FIG. 1 is a flowchart 1 of an information processing method according to an embodiment of the disclosure. As illustrated in FIG. 1, the method includes the following steps.

At step 101, a first network device receives first information and/or second information sent by one or more second network devices, in which the first information includes first configuration information related to CHO, and the second information includes second configuration information related to CPAC.

At step 102, the first network device sends the first configuration information and/or the second configuration information to a terminal, or third configuration information obtained after processing the first configuration information and/or the second configuration information to the terminal.

In an embodiment, in some optional embodiments, the first network device is a serving base station (gNB), or a base station to which a serving cell where the terminal is belongs. Correspondingly, the second network device may be a target base station, a candidate base station, or a base station to which a CHO candidate cell belongs. In other optional embodiments, the first network device may be a MN, and the second network device may be a SN.

In an embodiment, the first network device may directly send the first configuration information and/or the second configuration information to the terminal. Or, the first network device may process the first configuration information and/or the second configuration information to obtain the third configuration information, and then send the third configuration information obtained after processing to the terminal. For example, the first network device may perform reduction processing on the first configuration information and/or the second configuration information, such as reducing a number of CHO candidate cells and/or CPAC candidate cells. In practical applications, the first network device may process the second configuration information based on a measurement capability of the terminal, so that the third configuration information obtained after processing can match the measurement capability of the terminal.

The first configuration information includes measurement configuration information related to the CHO, and corresponding access resources, etc. The second configuration information includes measurement configuration information related to the CPAC, including a CPAC candidate cell list, a measurement configuration of each CPAC candidate cell, and a corresponding access resource, etc.

In some optional embodiments of the disclosure, the method further includes: sending, by the first network device, a first request to the one or more second network devices, in which the first request is used for requesting configuration information related to the CHO and/or the CPAC.

This embodiment can be applied to at least the following scenarios.

Scenario 1: a serving cell (such as the first network device) requests a CHO-related configuration from a target candidate cell (such as the second network device). In such case, the second network device, as a CHO candidate cell, feeds back the second configuration information related to the CPAC of the CHO candidate cell when feeding back the corresponding configuration information related to the CHO. In this scenario, the first network device receives the first configuration information sent by the second network device, and may receive the second configuration information sent by the second network device.

Scenario 2: the serving cell (such as the first network device) requests a CPAC-related configuration from a target candidate cell (such as the second network device). In such case, the second network device, as a CPAC candidate cell of the first network device, feeds back the configuration information related to the CPAC of the CPAC candidate cell when feeding back the corresponding configuration information related to the CPAC. The second configuration information fed back by the second network device may include relevant configuration information of the second network device as the CPAC candidate cell (which may be denoted as configuration information 1), and may also include relevant configuration information of the CPAC candidate cell of the second network device (which may be denoted as configuration information 2 or become configuration information related to the CPAC of the second network device). The second configuration information may include the configuration information 1, and may also include the configuration information 2.

In some optional embodiments, the first request includes at least one of:
indication information indicating whether the second network device can configure the CPAC;
measurement capability information of the terminal;
available measurement capability information of the terminal for the second network device; or
at least part of measurement results of the terminal.

In this embodiment, before sending the first request, the first network device decides to configure the CHO or the CPAC for the terminal, obtains measurement results of the terminal, and determines candidate cells according to the measurement results of the terminal, i.e., determines a second network device corresponding to each candidate cell. At least part of the measurement results of the terminal may be obtained from measurement results reported by the terminal. Or the measurement capability information of the terminal may be obtained from the measurement results reported by the terminal, or the first network device may obtain the measurement capability information from the terminal through an additional message or signaling. The first network device may determine whether the second network device can configure the CPAC based on the measurement results (e.g., measurement results of CHO candidate cells) reported by the terminal and/or a frequency point corresponding to a CHO candidate cell where the second network device is. The available measurement capability information of the terminal for the second network device may indicate a measurement capability of the terminal for CPAC candidate cells, for example, a maximum number of CPAC candidate cells for which the terminal can be configured.

In some optional embodiments, in a case where the first request includes the indication information indicating whether the second network device can configure the CPAC, and the indication information indicates that the second network device cannot configure the CPAC, or in a case where the first request does not include the indication information indicating whether the second network device can configure the CPAC, the method further includes: receiving, by the first network device, a second request sent by the second network device, in which the second request is used for requesting to configure the CPAC.

In this embodiment, in a case where the first request sent by the first network device to the second network device includes the indication information indicating whether the second network device can configure the CPAC, and the indication information indicates that the second network device cannot configure the CPAC, or in a case where the first request does not include the indication information indicating whether the second network device can configure the CPAC, the second network device can actively request the first network device to configure the CPAC, that is, the first network device receives the second request sent by the second network device for requesting to configure the CPAC.

In some optional embodiments, receiving, by the first network device, the second request sent by the second network device includes: receiving, by the first network device, a first response corresponding to the first request sent by the second network device, in which the first response includes the second request.

In this embodiment, after receiving the first request sent by the first network device, the second network device sends the first response corresponding to the first request to the first network device, and the first response may be an Acknowledgement (ACK) message or a Non-Acknowledgement (NACK) message. The second network device may carry the second request in the first response.

In some optional embodiments, the second request further includes the second configuration information.

In this embodiment, in a case where the second network device actively requests the first network device to configure the CPAC, the second network device may carry the second configuration information in the second request, to inform the first network device of its own CPAC configuration information when requesting to configure the CPAC.

In some optional embodiments, the second request includes first indication information, and the first indication information is used to indicate that the second request includes the second configuration information.

In this embodiment, the second request includes the first indication information, and the first indication information is used to inform the first network device that the second request includes the second configuration information.

In some optional embodiments of the disclosure, the method further includes: sending, by the first network device, fourth information to the second network device, in which the fourth information is used to acknowledge the second request.

In this embodiment, with interaction between the first network device and the second network device, it may be determined that the second network device can configure the CPAC or cannot configure the CPAC.

In some optional embodiments, the fourth information includes at least one of:
indication information indicating whether the second network device can configure the CPAC;
measurement capability information of the terminal;
measurement capability information of the terminal for CHO candidate cells and/or measurement capability information of the terminal for CPAC candidate cells; or
at least part of measurement results of the terminal.

In this embodiment, during interaction between the first network device and the second network device, corresponding measurement limitations may be provided while acknowledging the second request, that is, the fourth information may include at least one of the above information.

In other optional embodiments, in a case where the first network device acknowledges that the second network device can configure the CPAC, the first network device may directly process according to the second configuration information carried in the second request by the second network device, or directly send the second configuration information carried in the second request to the terminal. An execution order between sending the configuration to the terminal by the first network device and sending the fourth information by the first network device is not limited. In some optional embodiments, the first network device may not send the fourth information used for acknowledging the second request.

In some optional embodiments, the second configuration information includes at least one of:
a CPAC candidate cell list;
measurement configuration information related to the CPAC candidate cells;
an access resource corresponding to the CPAC candidate cells; or
an execution condition related to the CPAC candidate cells.

In this embodiment, contents included in the second configuration information represent different meanings depending on different scenarios. In the above scenario 1, all the CPAC candidate cells included in the second configuration information are CPAC candidate cells of the second network device. In the above scenario 2, since the second network device is the CPAC candidate cell of the first network device, the CPAC candidate cells included in the second configuration information include a cell where the second network device is (due to the second network device acts as the CPAC candidate cell of the first network device), which is denoted as a first-type CPAC candidate cell. The CPAC candidate cells included in the second configuration information may also include the CPAC candidate cells of the second network device, which are denoted as second-type CPAC candidate cells. For example, the above CPAC candidate cell list may specifically refer to as a CPAC candidate cell list of the CPAC candidate cells of the second network device. The CPAC candidate cells mentioned in the measurement configuration information related to the CPAC candidate cells, the access resource corresponding to the CPAC candidate cells, or the execution condition related to the CPAC candidate cells may include a cell where the second network device is at, or may refer to as the CPAC candidate cells of the second network device.

In some optional embodiments of the disclosure, the method further includes: sending, by the first network device, a first notification to the second network device in a case where the first network device processes the second configuration information.

In this embodiment, in response to performing a relevant operation (e.g., reduction processing) on the second configuration information, the first network device necessarily sends the first notification to the second network device to inform the second network device that the reduction processing has been performed on the second configuration information. Optionally, the first notification may include relevant information of CPAC candidate cells reserved by the first network device after the reduction processing, and even inform that information related to the CPAC candidate cells has been reduced.

In some optional embodiments of the disclosure, the method further includes: sending, the first network device, fifth information to the terminal, in which the fifth information includes measurement priority information.

Optionally, the first network device may send a radio resource control (RRC) message or a broadcast message to the terminal, in which the RRC message or the broadcast message includes the fifth information.

The measurement priority information indicates a measurement rule of the terminal, for example, which candidate cells are measured first. For example, the measurement priority information may include at least one of:
CHO candidate cells having a higher priority, and then CPAC candidate cells, which corresponds to candidate cells ranked in the top n in channel quality among the CHO candidate cells, having a lower priority;
prioritizing measurement of a designated frequency point, regardless of whether they are CHO candidate cells or CPAC candidate cells; or
prioritizing measurement of a designated CHO candidate cell and its CPAC candidate cell.

Certainly, the terminal may decide the measurement priority completely based on itself.

In some optional embodiments of the disclosure, the method includes: receiving, by the first network device, sixth information sent by the terminal, in which the sixth information includes candidate cell information to be measured and/or reserved which is determined by the terminal, and the candidate cell information includes CHO candidate cell information and/or CPAC candidate cell information; and sending, by the first network device, a second notification to a corresponding second network device or a third notification to a corresponding third network device based on the sixth information, in which the second network device is a network device corresponding to the CHO candidate cell information and/or the CPAC candidate cell information, the third network device is a network device corresponding to the CPAC candidate cell information, the second notification includes the CHO candidate cell information and/or the CPAC candidate cell information, and the third notification includes the CPAC candidate cell information.

In this embodiment, in the above scenario 1, the second network device is a network device corresponding to the CHO candidate cell information. In the above scenario 2, the second network device is a network device corresponding to the CPAC candidate cell information (mainly the first-type CPAC candidate cell).

In this embodiment, after receiving the configuration information sent by the first network device, the terminal measures the CHO candidate cells and/or the CPAC candidate cells and determines the execution condition. In a case where a configuration sent by the first network device exceeds the measurement capability of the terminal, the terminal needs to decide the candidate cells to be measured and reserved, and feeds the candidate cells to be measured and reserved back to the first network device, i.e., the first network device receives the sixth information sent by the terminal, and then informs the corresponding second network device or the third network device to release corresponding resources.

For example, as an example, in the above scenario 1, in response to receiving the first configuration information related to the CHO and the second configuration information related to the CPAC (or receives the third configuration information obtained after processing the first configuration information and the second configuration information), and determining that the configuration information exceeds its measurement capability, the terminal needs to decide the candidate cells to be measured and reserved. In response to a part of the CHO candidate cells and the CPAC candidate cells being reserved, the terminal sends the sixth information carrying the CHO candidate cell information and the CPAC candidate cell information to the first network device, and the first network device sends the second notification to the second network devices corresponding to the CPAC candidate cells or directly sends the third notification to the third network devices to which the CPAC candidate cells belong. In response to all the CHO candidate cells and a part of the CPAC candidate cells being reserved (even deleting all CPAC candidate cells), the terminal sends the sixth information carrying information related to the part of the CPAC candidate cells to the first network device, and the first network device sends the second notification to the second network devices corresponding to the CPAC candidate cells, or directly sends the third notification to the third network devices to which the part of CPAC candidate cells belong. As another example, in the above scenario 2, in response to the terminal receiving the second configuration information related to the CPAC, the second configuration information herein may include the configuration information related to the second network device as the CPAC candidate cell of the first network device (which may be denoted as configuration information 1, and the corresponding CPAC candidate cell is denoted as a first-type CPAC candidate cell), and may also include the configuration information related to the CPAC candidate cells of the second network device (which may be denoted as configuration information 2, and the corresponding CPAC candidate cells are denoted as second-type CPAC candidate cells). In response to receiving the configuration information 1 and the configuration information 2, the terminal determines that the configuration information exceeds its measurement capability, and then decides the CPAC candidate cells to be measured and reserved. In response to a part of the first-type CPAC candidate cells and a part of the second-type CPAC candidate cells being reserved, the terminal sends the sixth information carrying the CPAC candidate cell information to the first network device. The CPAC candidate cell information includes the information of the first-type CPAC candidate cell and the information of the second-type CPAC candidate cells. The first network device may send the second notification to the second network devices corresponding to the CPAC candidate cells, or may directly send the third notification to the third network devices to which the second-type CPAC candidate cells belong.

Based on the above embodiments, embodiments of the disclosure provides an information processing method. FIG. 2 is a flowchart 2 of an information processing method according to an embodiment of the disclosure. As illustrated in FIG. 2, the method includes the following steps.

At step 201, a second network device sends first information and/or second information to a first network device, in which the first information includes first configuration information related to CHO, the second information includes second configuration information related to CPAC, and at least part of information among the first configuration information and/or the second configuration information is used to be configured for a terminal by the first network device.

In this embodiment, the first configuration information includes measurement configuration information related to CHO, and corresponding access resources, etc. The second configuration information includes measurement configuration information related to CPAC, for example, may include a CPAC candidate cell list, a measurement configuration of each CPAC candidate cell, and a corresponding access resource, etc.

In some optional embodiments of the disclosure, the method further includes: receiving, by the second network device, a first request sent by the first network device, in which the first request is used to request configuration information related to the CHO and/or the CPAC.

This embodiment can be applied to at least the following scenarios.

Scenario 1: a serving cell (such as the first network device) requests a CHO-related configuration from a target candidate cell (such as the second network device). In such case, the second network device, as a CHO candidate cell, feeds back the second configuration information related to the CPAC of the CHO candidate cell when feeding back the corresponding configuration information related to the CHO. In this scenario, the first network device receives the first configuration information sent by the second network device, and may receive the second configuration information sent by the second network device.

Scenario 2: the serving cell (such as the first network device) requests a CPAC-related configuration from a target candidate cell (such as the second network device). In such case, the second network device, as a CPAC candidate cell of the first network device, feeds back configuration information related to the CPAC of the CPAC candidate cell when feeding back the corresponding configuration information related to the CPAC. The second configuration information fed back by the second network device may include relevant configuration information of the second network device as the CPAC candidate cell (which may be denoted as configuration information 1), and may also include relevant configuration information of the CPAC candidate cell of the second network device (which may be recorded as configuration information 2). The second configuration information may include the configuration information 1, and it may also include the configuration information 2.

In some optional embodiments, the first request includes at least one of:
indication information indicating whether the second network device can configure the CPAC;
measurement capability information of the terminal;
available measurement capability information of the terminal for the second network device; or
at least part of measurement results of the terminal.

In some optional embodiments, in a case where the first request includes the indication information indicating whether the second network device can configure the CPAC, and the indication information indicates that the second network device cannot configure the CPAC, or in a case where the first request does not include the indication information indicating whether the second network device can configure the CPAC, the method further includes: sending, by the second network device, a second request to the first network device, in which the second request is used to request to configure the CPAC.

In this embodiment, in a case where the first request sent by the first network device to the second network device includes the indication information indicating whether the second network device can configure the CPAC, and the indication information indicates that the second network device cannot configure the CPAC, or in a case where the first request does not include the indication information indicating whether the second network device can configure the CPAC, the second network device can actively request the first network device to configure the CPAC, that is, the first network device receives the second request that requests to configure the CPAC sent by the second network device.

In some optional embodiments, sending, by the second network device, the second request to the first network device includes: sending, by the second network device, a first response corresponding to the first request to the first network device, in which the first response includes the second request.

In this embodiment, after receiving the first request sent by the first network device, the second network device sends the first response to the first network device in response to the first request, such as an ACK/NACK message. The second network device may carry the second request in the first response.

In some optional embodiments, the second request further includes the second configuration information.

In this embodiment, in a case where the second network device actively requests the first network device to configure the CPAC, the second network device may carry the second configuration information in the second request, to inform the first network device of its own CPAC configuration information when requesting to configure the CPAC.

In some optional embodiments, the second request includes first indication information, and the first indication information is used to indicate that the second request includes the second configuration information.

In this embodiment, the second request may also include the first indication information, and the first indication information is used to inform the first network device that the second request includes the second configuration information.

In some optional embodiments, the method further includes: receiving, by the second network device, fourth information sent by the first network device, in which the fourth information is used to acknowledge the second request.

In this embodiment, with interaction between the first network device and the second network device, it may be determined that the second network device can configure the CPAC or cannot configure the CPAC.

In some optional embodiments, the fourth information includes at least one of:
indication information indicating whether the second network device can configure the CPAC;
measurement capability information of the terminal;
measurement capability information of the terminal for CHO candidate cells and/or measurement capability information of the terminal for CPAC candidate cells; or
at least part of measurement results of the terminal.

In this embodiment, through interaction between the first network device and the second network device, corresponding measurement limitations may be provided while acknowledging the second request. That is, the fourth information may include at least one of the above information.

In some optional embodiments, the second configuration information includes at least one of:
a CPAC candidate cell list;
measurement configuration information related to the CPAC candidate cells;
an access resource corresponding to the CPAC candidate cells; or
an execution condition related to the CPAC candidate cells.

In some optional embodiments of the disclosure, the method further includes: receiving, by the second network device, a first notification sent by the first network device, in which the first notification is used to inform that the first network device has processed the second configuration information.

In this embodiment, in response to performing a related operation (e.g., reduction processing) on the second configuration information, the first network device necessarily sends the first notification to the second network device to inform the second network device that the first network device has performed the reduction processing on the second configuration information. Optionally, the first notification may include relevant information of CPAC candidate cells reserved by the first network device after the reduction processing.

In some optional embodiments of the disclosure, the method further includes: receiving, by the second network device, a second notification sent by the first network device, in which the second notification includes CHO candidate cell information and/or CPAC candidate cell information, the CHO candidate cell information and/or the CPAC candidate cell information represent candidate cell information to be measured and/or reserved which is determined by the terminal.

In some optional embodiments, the method further includes: sending, by the second network device, a fourth notification to a third network device, in which the fourth notification includes the CPAC candidate cell information, and the third network device is a network device corresponding to the CPAC candidate cell information.

In this embodiment, in the above Scenario 1, the second network device is a network device corresponding to the CHO candidate cell information, and in the above Scenario 2, the second network device is a network device corresponding to the CPAC candidate cell information.

In this embodiment, after receiving the configuration information sent by the first network device, the terminal measures the CHO candidate cells and/or the CPAC candidate cells and determines the execution condition. In a case where a configuration sent by the first network device exceeds the measurement capability of the terminal, the terminal needs to decide the candidate cells to be measured and reserved, and feeds the candidate cells to be measured and reserved back to the first network device, and the first network device informs the corresponding second network device, such that the second network device can further inform the corresponding third network device to release the corresponding resources.

For example, in the above Scenario 2, in response to the terminal receiving the second configuration information related to the CPAC, the second configuration information herein may include the configuration information related to the second network device as the CPAC candidate cell of the first network device (which is denoted as configuration information 1, and the corresponding CPAC candidate cell is denoted as a first-type CPAC candidate cell), and may also include the configuration information related to the CPAC candidate cells of the second network device (which is denoted as configuration information 2, and the corresponding CPAC candidate cell is denoted as the second-type CPAC candidate cell). In response to receiving the configuration information 1 and the configuration information 2, the terminal determines that the configuration information exceeds the measurement capability, and decides the CPAC candidate cells to be measured and reserved. In response to a part of the first CPAC candidate cells and a part of the second CPAC candidate cells being reserved, the terminal sends the sixth information carrying the CPAC candidate cell information to the first network device, in which the CPAC candidate cell information includes information of the first-type CPAC candidate cell and information of the second-type CPAC candidate cells. The first network device sends the second notification to the second network devices to which the first-type CPAC candidate cells belong, and sends the second notification to the second network devices corresponding to the second-type CPAC candidate cells. The second network device may send the third notification to the third network devices to which the second-type CPAC candidate cells belong after receiving the second notification.

Based on the above embodiments, an embodiment of the disclosure provides an information processing method. FIG. 3 is a flowchart 3 of an information processing method of the embodiment of the disclosure. As illustrated in FIG. 3, the method includes the following steps.

At step 301, a terminal receives first configuration information related to CHO and/or second configuration information related to CPAC sent by a first network device, or third configuration information obtained after processing the first configuration information and/or the second configuration information which is sent by the first network device.

At step 302, the terminal performs cell measurement based on the first configuration information and/or the second configuration information, or based on the third configuration information.

In some optional embodiments, performing, by the terminal, the cell measurement based on the first configuration information and/or the second configuration information, or based on the third configuration information includes: determining, by the terminal, a measurement priority, and performing, by the terminal, the cell measurement based on the measurement priority and configuration information, in which the configuration information includes the first configuration information and/or the second configuration information, or the configuration information includes the third configuration information.

In the embodiment, the measurement priority information indicates measurement rules of the terminal, for example, which candidate cells are measured first. For example, the measurement priority information may include at least one of:
CHO candidate cells having a higher priority, and then CPAC candidate cells, which corresponds to candidate cells ranked in the top n in channel quality among the CHO candidate cells, having a lower priority;
prioritizing measurement of a designated frequency point, regardless of whether they are CHO candidate cells or CPAC candidate cells; or
prioritizing measurement of a designated CHO candidate cell and its CPAC candidate cell.

Certainly, the terminal may decide the measurement priority completely based on itself.

In some optional embodiments, determining, by the terminal, the measurement priority, includes: receiving, by the terminal, fifth information sent by the first network device, in which the fifth information includes measurement priority information; or, determining, by the terminal, the measurement priority in a predefined manner.

Optionally, the terminal may receive an RRC message or a broadcast message sent by the first network device, in which the RRC message or the broadcast message includes the fifth information.

In some optional embodiments, the second configuration information includes at least one of:
a CPAC candidate cell list;
measurement configuration information related to the CPAC candidate cells;
an access resource corresponding to the CPAC candidate cells; or
an execution condition related to the CPAC candidate cells.

In some optional embodiments of the disclosure, the method includes: in a case where the terminal determines that the configuration information exceeds a capability of the terminal, reducing and/or integrating, by the terminal, candidate cells related to the configuration information, and determining, by the terminal, candidate cell information to be measured and/or reserved, in which the configuration information includes the first configuration information and/or the second configuration information, or the configuration information includes the third configuration information; and sending, by the terminal, sixth information to the first network device, in which the sixth information includes the candidate cell information to be measured and/or reserved which is determined by the terminal, and the candidate cell information includes CHO candidate cell information and/or CPAC candidate cell information.

In this embodiment, after receiving the configuration information sent by the first network device, the terminal measures the CHO candidate cells and/or the CPAC candidate cells and weights the execution condition. In a case where a configuration sent by the first network device exceeds the measurement capability of the terminal, the terminal needs to decide the candidate cells to be measured and reserved, and feed the candidate cells to be measured back to the first network device. That is, the first network device receives the sixth information sent by the terminal, and then informs the corresponding second network device or the third network device to release the corresponding resources.

In this embodiment, contents included in the second configuration information represents different meanings depending on different scenarios. In the above Scenario 1, all the CPAC candidate cells included in the second configuration information are CPAC candidate cells of the second network device. In the above Scenario 2, since the second network device is the CPAC candidate cell of the first network device, the CPAC candidate cells included in the second configuration information may include a cell where the second network device is (due to the second network device is the CPAC candidate cell of the first network device), which is denoted as a first-type CPAC candidate cell. The CPAC candidate cells included in the second configuration information may also include the CPAC candidate cells of the second network device, which may be denoted as second-type CPAC candidate cells.

The information processing method of embodiments of the disclosure will be described in detail with specific examples.

In an example, the first network device being as a serving cell, the second network device being as a CHO candidate cell, and requesting CHO-related configuration information are used as an example for description.

At step 400, the serving cell decides to configure CHO for a UE, and determine CHO candidate cells based on a measurement result of the UE.

At step 401, the serving cell requests CHO resources from the CHO candidate cells.

When the serving cell requests the CHO resources from the CHO candidate cells, the request may carry at least one of the following information:
indication information indicating whether CHO candidate cells can configure CPAC;
measurement capability information of the UE (optionally, a maximum measurement capability, such as a maximum number of candidate cells that the UE can measure);
available measurement capability information of the UE for the second network device (e.g., a maximum number of configurable CPAC candidate cells); or
at least part of measurement results of the UE.

As to whether the CHO candidate cell can configure the CPAC, the serving cell may decide based on a CHO candidate measurement result and/or its frequency point.

At step 402, the CHO candidate cell receives a request sent by the serving cell and sends a response (ACK/NACK) message to the serving cell.

Possible behaviors of CHO candidate cell may include the followings.

Step 402-a: in response to the request received by the CHO candidate cell indicates that the CHO candidate cell cannot configure the CPAC or does no includes this indication, the CHO candidate cell may request to configure the CPAC in the response (ACK/NACK) message sent to the serving cell (which is equivalent to the second request in the aforementioned embodiment). The request may also carry configuration information related to the CPAC.

Optionally, the request may carry an explicit indication (which is equivalent to the first indication information in the aforementioned embodiment) to inform the serving cell that its configuration carries the configuration information related to the CPAC.

Step 402-b: in response to the request received by the CHO candidate cell indicates that the CHO candidate cell can configure the CPAC, and the CHO candidate cell has determined a CPAC candidate list (which may be determined based on the measurement result of the UE, etc.), the CHO candidate cell provides the configuration information related to the CPAC and corresponding access resources.

At step 403, the serving cell receives configurations of one or more CHO candidate cells (including CHO-related configurations and/or CPAC-related configurations) in succession. The possible behaviors of the serving cell may include the followings.

Step 403-a: the serving cell reduces or integrates configuration information based on CHO configuration information and/or CPAC configuration information provided by the CHO candidate cell. The decision may be made based on the measurement result of the UE and/or measurement objects already determined by the serving cell and other CHO candidate cells. The serving cell further sends the CHO configuration including a CPAC configuration to the UE via one or more RRC messages.

Optionally, in a case where the serving cell reduces the CPAC candidate cells of a certain CHO candidate cell, the serving cell sends a notification to the CHO candidate cell to inform the CHO candidate cell of this situation.

Step 403-b: the serving cell directly and transparently transmits the CHO configuration including the CPAC configuration provided by each CHO candidate cell to the UE.

At step 404, the UE receives the configuration sent by the serving cell, measures the CHO candidate cells and/or the CPAC candidate cells based on a measurement priority and weights an execution condition. When the configuration sent by the serving cell exceeds the UE capability, the UE may decide the candidate cells to be measured and reserved, and feeds the candidate cells to be measured and reserved back to the serving cell, so that the serving cell can inform the corresponding CHO candidate cells (and may further inform its CPAC candidate cells) to release the corresponding resources.

In addition, the serving cell may also send a configured message or an RRC message to indicate the measurement priority of the UE (or the measurement priority may be directly defined in a protocol). For example, the measurement priority may include at least one of:
1) without exceeding the capability of the UE, prioritizing measurement of CHO candidate cell by the UE, and followed by measurement of CPAC candidate cells corresponding to candidate cells ranked in the top n in channel quality among the CHO candidate cells;
2) prioritizing measurement of a designated frequency point, regardless of whether they are CHO candidate cells or CPAC candidate cells; or
3) prioritizing measurement of a certain CHO candidate cell and its CPAC candidate cell; or
4) implementing completely based on the UE.

Based on the above embodiments, an embodiment of the disclosure also provides an information processing apparatus, which is configured in a first network device. FIG. 4 is a schematic diagram 1 of a formation structure of an information processing apparatus according to an embodiment of the disclosure. As illustrated in FIG. 4, the apparatus includes a first communication module 11 and a second communication module 12.

The first communication module 11 is configured to receive first information and/or second information sent by one or more second network devices, in which the first information includes first configuration information related to CHO, and the second information includes second configuration information related to CPAC.

The second communication module 12 is configured to send the first configuration information and/or the second configuration information to a terminal, or third configuration information obtained after processing the first configuration information and/or the second configuration information to the terminal.

In some optional embodiments of the disclosure, the first communication module 11 is further configured to: send a first request to the one or more second network devices, in which the first request is used for requesting configuration information related to the CHO and/or the CPAC.

In some optional embodiments of the disclosure, the first request includes at least one of:
indication information indicating whether the second network device can configure the CPAC;
measurement capability information of the terminal;
available measurement capability information of the terminal for the second network device; or
at least part of measurement results of the terminal.

In some optional embodiments of the disclosure, the first communication module 11 is further configured to: in a case where the first request includes the indication information indicating whether the second network device can configure the CPAC, and the indication information indicates that the second network device cannot configure the CPAC, or in a case where the first request does not include the indication information indicating whether the second network device can configure the CPAC, receive a second request sent by the second network device, in which the second request is used to request to configure the CPAC.

In some optional embodiments of the disclosure, the second request further includes the second configuration information.

In some optional embodiments of the disclosure, the second request includes first indication information, and the first indication information is used to indicate that the second request includes the second configuration information.

In some optional embodiments of the disclosure, the first communication module 11 is further configured to: receive a first response corresponding to the first request sent by the second network device, in which the first response includes the second request.

In some optional embodiments of the disclosure, the first communication module 11 is further configured to: send fourth information to the second network device, in which the fourth information is used to acknowledge the second request.

In some optional embodiments of the disclosure, the fourth information includes at least one of:
indication information indicating whether the second network device can configure the CPAC;
measurement capability information of the terminal;
measurement capability information of the terminal for CHO candidate cells and/or measurement capability information of the terminal for CPAC candidate cells; or
at least part of measurement results of the terminal.

In some optional embodiments of the disclosure, the second configuration information includes at least one of:
a CPAC candidate cell list;
measurement configuration information related to the CPAC candidate cells;
an access resource corresponding to the CPAC candidate cells; or
an execution condition related to the CPAC candidate cells.

In some optional embodiments of the disclosure, the first communication module 11 is further configured to: send a first notification to the second network device in a case where the first network device processes the second configuration information.

In some optional embodiments of the disclosure, the second communication module 12 is further configured to: send fifth information to the terminal, in which the fifth information includes measurement priority information.

In some optional embodiments of the disclosure, the second communication module 12 is further configured to: receive sixth information sent by the terminal, in which the sixth information includes candidate cell information to be measured and/or reserved which is determined by the terminal, and the candidate cell information includes CHO candidate cell information and/or CPAC candidate cell information.

The first communication module 11 is further configured to: send a second notification to a corresponding second network device or a third notification to a corresponding third network device based on the sixth information, in which the second network device is a network device corresponding to the CHO candidate cell information and/or the CPAC candidate cell information, the third network device is a network device corresponding to the CPAC candidate cell information, the second notification includes the CHO candidate cell information and/or the CPAC candidate cell information, and the third notification includes the CPAC candidate cell information.

In an embodiment of the disclosure, the first communication module 11 and the second communication module 12 in the apparatus can be realized by a communication module (including a basic communication kit, an operating system, a communication module, a standardized interface and a protocol, etc.) and a transceiver antenna in practical applications.

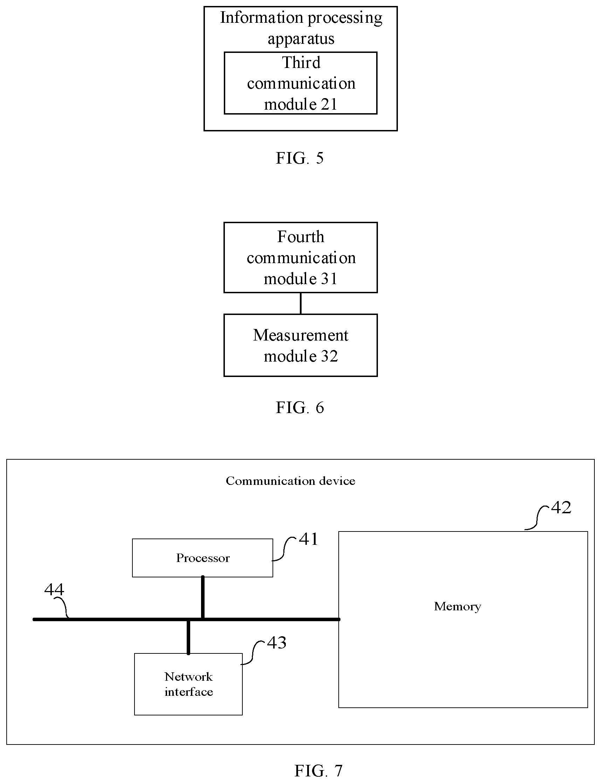

The embodiment of the disclosure also provides an information processing apparatus, which is applied to a second network device. FIG. 5 is a schematic diagram 2 of a formation structure of an information processing apparatus according to an embodiment of the disclosure. As illustrated in FIG. 5, the apparatus includes: a third communication module 21, configured to send first information and/or second information to a first network device, in which the first information includes first configuration information related to CHO, the second information includes second configuration information related to CPAC, and at least part of information among the first configuration information and/or the second configuration information is used to be configured for a terminal by the first network device.

In some optional embodiments of the disclosure, the third communication module 21 is further configured to: receive a first request sent by the first network device, in which the first request is used to request configuration information related to the CHO and/or the CPAC.

In some optional embodiments of the disclosure, the first request includes at least one of:
indication information indicating whether the second network device can configure the CPAC;
measurement capability information of the terminal;
available measurement capability information of the terminal for the second network device; or
at least part of measurement results of the terminal.

In some optional embodiments of the disclosure, the third communication module 21 is further configured to: in a case where the first request includes the indication information indicating whether the second network device can configure the CPAC, and the indication information indicates that the second network device cannot configure the CPAC, or in a case where the first request does not include the indication information indicating whether the second network device can configure the CPAC, send a second request to the first network device, in which the second request is used to request to configure the CPAC.

In some optional embodiments of the disclosure, the second request further includes the second configuration information.

In some optional embodiments of the disclosure, the second request includes first indication information, and the first indication information is used to indicate that the second request includes the second configuration information.

In some optional embodiments of the disclosure, the third communication module 21 is further configured to: send a first response corresponding to the first request to the first network device, in which the first response includes the second request.

In some optional embodiments of the disclosure, the third communication module 21 is further configured to: receive fourth information sent by the first network device, in which the fourth information is used to acknowledge the second request.

In some optional embodiments of the disclosure, the fourth information includes at least one of:
indication information indicating whether the second network device can configure the CPAC;
measurement capability information of the terminal;
measurement capability information of the terminal for CHO candidate cells and/or measurement capability information of the terminal for CPAC candidate cells; or
at least part of measurement results of the terminal.

In some optional embodiments of the disclosure, the second configuration information includes at least one of:
a CPAC candidate cell list;
measurement configuration information related to the CPAC candidate cells;
an access resource corresponding to the CPAC candidate cells; or
an execution condition related to the CPAC candidate cells.

In some optional embodiments of the disclosure, the third communication module 21 is further configured to: receive a first notification sent by the first network device, in which the first notification is used to inform that the first network device has processed the second configuration information.

In some optional embodiments of the disclosure, the third communication module 21 is further configured to: receive a second notification sent by the first network device, in which the second notification includes CHO candidate cell information and/or CPAC candidate cell information, the CHO candidate cell information and/or the CPAC candidate cell information represent candidate cell information to be measured and/or reserved which is determined by the terminal.

In some optional embodiments of the disclosure, the third communication module 21 is further configured to: send a fourth notification to a third network device, in which the fourth notification includes the CPAC candidate cell information, and the third network device is a network device corresponding to the CPAC candidate cell information.

In an embodiment of the disclosure, the third communication module 21 in the apparatus can be realized by a communication module (including a basic communication kit, an operating system, a communication module, a standardized interface and a protocol, etc.) and a transceiver antenna in practical applications.

An embodiment of the disclosure also provides an information processing apparatus, which is applied to a terminal. FIG. 6 is a schematic diagram 3 of a formation structure of an information processing apparatus according to an embodiment of the disclosure. As illustrated in FIG. 6, the apparatus includes a fourth communication module 31 and a measurement module 32.

The fourth communication module 31 is configured to: receive first configuration information related to CHO and/or second configuration information related to CPAC sent by a first network device, or third configuration information obtained after processing the first configuration information and/or the second configuration information which is sent by the first network device.

The measurement module 32 is configured to perform cell measurement based on the first configuration information and/or the second configuration information, or based on the third configuration information.

In some optional embodiments of the disclosure, the measurement module 32 is further configured to: determine a measurement priority, and perform cell measurement based on the measurement priority and configuration information, in which the configuration information includes the first configuration information and/or the second configuration information, or the configuration information includes the third configuration information.

In some optional embodiments of the disclosure, the measurement module 32 is further configured to: receive fifth information sent by the first network device by the fourth communication module 31, in which the fifth information includes measurement priority information; or, determine the measurement priority in a predefined manner.

In some optional embodiments of the disclosure, the second configuration information includes at least one of:
a CPAC candidate cell list;
measurement configuration information related to the CPAC candidate cells;
an access resource corresponding to the CPAC candidate cells; or
an execution condition related to the CPAC candidate cells.

In some optional embodiments of the disclosure, the apparatus also includes a processing module. The processing module is configured to, in a case of determining that the configuration information exceeds a capability of the terminal, reduce and/or integrate candidate cells related to the configuration information, and determine candidate cell information to be measured and/or reserved, in which the configuration information includes the first configuration information and/or the second configuration information, or the configuration information includes the third configuration information.

The fourth communication module 31 is further configured to: send sixth information to the first network device, in which the sixth information includes the candidate cell information to be measured and/or reserved which is determined by the terminal, and the candidate cell information includes CHO candidate cell information and/or CPAC candidate cell information.

In the embodiment of the disclosure, the measurement module 32 and the processing module in the apparatus can be realized by a Central Processing Unit (CPU), a Digital Signal Processor (DSP), a Microcontroller Unit (MCU) or a Field-Programmable Gate Array (FPGA) in practical applications. The fourth communication module 31 in the apparatus can be realized by a communication module (including a basic communication kit, an operating system, a communication module, a standardized interface and a protocol, etc.) and a transceiver antenna in practical applications.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the apparatus can be divided into different functional modules to complete all or part of the functions described above. Moreover, the above apparatus embodiments and the method embodiments of the disclosure belong to the same concept, and the specific implementations in the apparatus embodiments are described in detail in the method embodiments, which will not be repeated here.

The embodiment of the disclosure also provides a communication device. The communication device is the first network device, the second network device or the terminal in the aforementioned embodiments. FIG. 7 is a schematic diagram of a hardware formation structure of a communication device according to an embodiment of the disclosure. As illustrated in FIG. 7, the communication device includes a memory 42, a processor 41 and a computer program stored in the memory 42 and executable by the processor 41. When the processor 41 executes the program, the steps of the information processing method applied to the first network device, the second network device or the terminal according to the embodiments of the disclosure are implemented.

Optionally, the communication device also includes at least one network interface 43. The components in the communication device are coupled together by a bus system 44. It is understood that the bus system 44 is used to realize connection communications between these components. The bus system 44 includes a power bus, a control bus and a status signal bus in addition to a data bus. For the sake of clarity, all the buses are labeled as bus system 44 in FIG. 7.

It is understood that the memory 42 may be a volatile memory or a nonvolatile memory, and it may also include both volatile and nonvolatile memories. The nonvolatile memory may be a Read Only Memory (ROM), a Programmable ROM (PROM), an Erasable Programmable ROM (EPROM), an Electrically Erasable Programmable ROM (EEPROM), a Ferromagnetic Random Access Memory (FRAM), a flash memory, a magnetic surface memory, an optical disk, or a Compact Disc ROM (CD-ROM). The magnetic surface memory may be a magnetic disk or a magnetic tape. The volatile memory may be a Random Access Memory (RAM), which is used as an external cache. There are many kinds of RAMs that are available, which include, but are not limited to, a Static RAM (SRAM), a Synchronous Static RAM (SSRAM), a Dynamic RAM (DRAM), a Synchronous Dynamic RAM (SDRAM), a Double Data Rate Synchronous Dynamic RAM (DDRSDRAM), an Enhanced Synchronous Dynamic RAM (ESDRAM), a SyncLink Dynamic RAM (SLDRAM), and a Direct Rambus RAM (DRRAM). The memory 42 described in the embodiment of the disclosure includes, but is not limited to, these memories and any other suitable types of memories.

The methods disclosed in the above embodiments of the disclosure are applied to the processor 41 or realized by the processor 41. The processor 41 may be an integrated circuit chip having a signal processing capability. In implementation, the steps of the above methods can be completed by hardware (integrated logic circuits) or software (instructions) in the processor 41. The above processor 41 may be a general processor, a DSP or other programmable logic components, a discrete gate or a transistor logic components, discrete hardware components, etc. The processor 41 may implement or execute the methods, steps and logic blocks disclosed in the embodiments of the disclosure. The general processor can be a microprocessor or any conventional processor. The steps of the methods disclosed in the embodiments of the disclosure can be directly embodied as being implemented by a hardware decoder, or as being implemented by a combination of hardware and software modules in the decoder. The software module is located in a storage medium, which is located in the memory 42. The processor 41 reads the information in the memory 42 and implements the steps of the aforementioned methods in combination with its hardware.

In an exemplary embodiment, the communication device may be implemented by one or more Application Specific Integrated Circuits (ASICs), DSPs, Programmable Logic Devices (PLDs), Complex Programmable Logic Devices (CPLDs), FPGAs, general-purpose processors, controllers, MCUs, microprocessors, or other electronic components, and is used for executing the aforementioned methods.

In an exemplary embodiment, the embodiment of the disclosure also provides a computer-readable storage medium, e.g., the memory 42 including the computer program. When the above computer program is executed by the processor 41 of the communication device, the steps described in the aforementioned methods are implemented. The computer-readable storage medium may be a FRAM, a ROM, a PROM, an EPROM, an EEPROM, a flash memory, a magnetic surface memory, an optical disk, a CD-ROM or other memories. It may also be a device including one of or any combination of the above memories.

The embodiment of the disclosure also provides a computer-readable storage medium on which a computer program is stored. When the computer program is executed by a processor, the steps of the information processing method applied to the first network device, the second network device or the terminal in the embodiment of the disclosure are implemented.

The methods disclosed in the method embodiments of the disclosure can be arbitrarily combined without conflict to obtain a new method embodiment.

The features disclosed in the product embodiments of the disclosure can be arbitrarily combined without conflict to obtain a new product embodiment.

The features disclosed in the method embodiments or device embodiments of the disclosure can be arbitrarily combined without conflict to obtain a new method embodiment or device embodiment.

In the embodiments of the disclosure, it should be understood that the disclosed devices and methods can be realized in other ways. The device embodiments described above are only schematic. The unit is classified by its logical function, and it may be classified in other ways in actual implementation. For example, multiple units or components may be combined or integrated into another system, or some features may be omitted or may not be implemented. In addition, mutual coupling, direct coupling or communication connections of the components shown or discussed may be realized through some interfaces, and indirect coupling or communication connections of devices or units may be electrical, mechanical or in other forms.

The units described above as independent components may or may not be physically separated, and the components displayed as units may or may not be physical units, that is, they may be located in one place or distributed to multiple network units. Some or all of the units may be selected according to actual needs to achieve the purpose of the scheme of the embodiment.

In addition, all the functional units in the embodiments of the disclosure may be integrated into one processing unit, or each unit can be used separately as an independent unit, or two or more units may be integrated into one unit. The above integrated units may be realized in the form of hardware, or in the form of a combination of hardware and software functional units.

It is understood by those skilled in the art that all or part of the steps of the above-mentioned method embodiments may be implemented by using a program to instruct related hardware, and the program is stored in a computer-readable storage medium. When the program is executed, the steps including the above-mentioned method embodiments are implemented. The above storage medium includes: a mobile storage device, a ROM, a RAM, a magnetic disk or an optical disk, and other medium that can be used for storing program codes.

Or, if the integrated units of the disclosure are realized in the form of software functional modules and sold or used as independent products, they may also be stored in a computer-readable storage medium. Based on this understanding, the technical scheme of the embodiment of the disclosure in essence or the part that contributes to related art may be embodied in the form of a software product. The computer software product is stored in a storage medium and includes several instructions to cause a computer device (which may be a personal computer, a server, a network device, etc.) to perform all or part of the methods described in the embodiments of the disclosure. The above storage medium includes: a mobile storage device, a ROM, a RAM, a magnetic disk or an optical disk, and other mediums that can be used for storing program codes.

Some specific implementations of the disclosure are illustrated above, which do not limit the protection scope of the disclosure. Those technicians familiar with this technical field can easily think of changes or substitutions within the technical scope disclosed in the disclosure, which should be included in the protection scope of the disclosure. Therefore, the scope of protection of the disclosure should be based on the scope of protection of the claims.

## Claims

1. An information processing method, comprising:
receiving, by a first network device, first information and/or second information sent by one or more second network devices, wherein the first information comprises first configuration information related to conditional handover (CHO), and the second information comprises second configuration information related to conditional primary secondary cell (PScell) addition/change (CPAC); and
sending, by the first network device, the first configuration information and/or the second configuration information to a terminal, or third configuration information obtained after processing the first configuration information and/or the second configuration information to the terminal.

2. The method of claim 1, further comprising:
sending, by the first network device, a first request to the one or more second network devices, wherein the first request is used for requesting configuration information related to the CHO and/or the CPAC.

3. The method of claim 2, wherein the first request further comprises at least one of:
indication information indicating whether the second network device can configure the CPAC;
measurement capability information of the terminal;
available measurement capability information of the terminal for the second network device; or
at least part of measurement results of the terminal.

4. The method of claim 3, wherein in a case where the first request comprises the indication information indicating whether the second network device can configure the CPAC, and the indication information indicates that the second network device cannot configure the CPAC, or in a case where the first request does not comprise the indication information indicating whether the second network device can configure the CPAC, the method further comprises:
receiving, by the first network device, a second request sent by the second network device, wherein the second request is used to request to configure the CPAC.

5. The method of claim 4, wherein the second request further comprises the second configuration information.

6. The method of claim 5, wherein the second request comprises first indication information, and the first indication information is used to indicate that the second request comprises the second configuration information.

7. The method of claim 4, wherein receiving, by the first network device, the second request sent by the second network device comprises:
receiving, by the first network device, a first response corresponding to the first request sent by the second network device, wherein the first response comprises the second request.

8. The method of claim 4, further comprising:
sending, by the first network device, fourth information to the second network device, wherein the fourth information is used to acknowledge the second request.

9. The method of claim 8, wherein the fourth information comprises at least one of:
indication information indicating whether the second network device can configure the CPAC;
measurement capability information of the terminal;
measurement capability information of the terminal for CHO candidate cells and/or measurement capability information of the terminal for CPAC candidate cells; or
at least part of measurement results of the terminal.

10. The method of any one of claims 1-9, wherein the second configuration information comprises at least one of:
a CPAC candidate cell list;
measurement configuration information related to CPAC candidate cells;
an access resource corresponding to the CPAC candidate cells; or
an execution condition related to the CPAC candidate cells.

11. The method of claim 1, further comprising:
sending, by the first network device, a first notification to the second network device in a case where the first network device processes the second configuration information.

12. The method of claim 1, further comprising:
sending, the first network device, fifth information to the terminal, wherein the fifth information comprises measurement priority information.

13. The method of claim 1, further comprising:
receiving, by the first network device, sixth information sent by the terminal, wherein the sixth information comprises candidate cell information to be measured and/or reserved which is determined by the terminal, and the candidate cell information comprises CHO candidate cell information and/or CPAC candidate cell information; and
sending, by the first network device, a second notification to a corresponding second network device or a third notification to a corresponding third network device based on the sixth information, wherein the second network device is a network device corresponding to the CHO candidate cell information and/or the CPAC candidate cell information, the third network device is a network device corresponding to the CPAC candidate cell information, the second notification comprises the CHO candidate cell information and/or the CPAC candidate cell information, and the third notification comprises the CPAC candidate cell information.

14. An information processing method, comprising:
sending, by a second network device, first information and/or second information to a first network device, wherein the first information comprises first configuration information related to conditional handover (CHO), the second information comprises second configuration information related to conditional primary secondary cell (PScell) addition/change (CPAC), and at least part of information among the first configuration information and/or the second configuration information is used to be configured for a terminal by the first network device.

15. The method of claim 14, further comprising:
receiving, by the second network device, a first request sent by the first network device, wherein the first request is used to request configuration information related to the CHO and/or the CPAC.

16. The method of claim 15, wherein the first request comprises at least one of:
indication information indicating whether the second network device can configure the CPAC;
measurement capability information of the terminal;
available measurement capability information of the terminal for the second network device; or
at least part of measurement results of the terminal.

17. The method of claim 16, wherein in a case where the first request comprises the indication information indicating whether the second network device can configure the CPAC, and the indication information indicates that the second network device cannot configure the CPAC, or in a case where the first request does not comprise the indication information indicating whether the second network device can configure the CPAC, the method further comprises:
sending, by the second network device, a second request to the first network device, wherein the second request is used to request to configure the CPAC.

18. The method of claim 17, wherein the second request further comprises the second configuration information.

19. The method of claim 18, wherein the second request comprises first indication information, and the first indication information is used to indicate that the second request comprises the second configuration information.

20. The method according to claim 17, wherein sending, by the second network device, the second request to the first network device comprises:
sending, by the second network device, a first response corresponding to the first request to the first network device, wherein the first response comprises the second request.

21. The method according to claim 17, further comprising:
receiving, by the second network device, fourth information sent by the first network device, wherein the fourth information is used to acknowledge the second request.

22. The method of claim 21, wherein the fourth information comprises at least one of:
indication information indicating whether the second network device can configure the CPAC;
measurement capability information of the terminal;
measurement capability information of the terminal for CHO of candidate cells and/or measurement capability information of the terminal for CPAC of the candidate cells; or
at least part of measurement results of the terminal.

23. The method of any one of claims 14-22, wherein the second configuration information comprises at least one of:
a CPAC candidate cell list;
measurement configuration information related to CPAC candidate cells;
an access resource corresponding to the CPAC candidate cells; or
an execution condition related to the CPAC candidate cells.

24. The method of claim 14, further comprising:
receiving, by the second network device, a first notification sent by the first network device, wherein the first notification is used to inform that the first network device has processed the second configuration information.

25. The method of claim 14, further comprising:
receiving, by the second network device, a second notification sent by the first network device, wherein the second notification comprises CHO candidate cell information and/or CPAC candidate cell information, the CHO candidate cell information and/or the CPAC candidate cell information represent candidate cell information to be measured and/or reserved which is determined by the terminal.

26. The method of claim 25, further comprising:
sending, by the second network device, a fourth notification to a third network device, wherein the fourth notification comprises the CPAC candidate cell information, and the third network device is a network device corresponding to the CPAC candidate cell information.

27. An information processing method, comprising:
receiving, by a terminal, first configuration information related to conditional handover (CHO) and/or second configuration information related to conditional primary secondary cell (PScell) addition/change (CPAC) sent by a first network device, or third configuration information obtained after processing the first configuration information and/or the second configuration information which is sent by the first network device; and
performing, by the terminal, cell measurement based on the first configuration information and/or the second configuration information, or based on the third configuration information.

28. The method of claim 27, wherein performing, by the terminal, the cell measurement based on the first configuration information and/or the second configuration information, or based on the third configuration information comprises:
determining, by the terminal, a measurement priority, and performing, by the terminal, the cell measurement based on the measurement priority and configuration information, wherein the configuration information comprises the first configuration information and/or the second configuration information, or the configuration information comprises the third configuration information.

29. The method of claim 28, wherein determining, by the terminal, the measurement priority comprises:
receiving, by the terminal, fifth information sent by the first network device, wherein the fifth information comprises measurement priority information; or,
determining, by the terminal, the measurement priority in a predefined manner.

30. The method of claim 27, wherein the second configuration information comprises at least one of:
a CPAC candidate cell list;
measurement configuration information related to CPAC candidate cells;
an access resource corresponding to the CPAC candidate cells; or
an execution condition related to the CPAC candidate cells.

31. The method of claim 27, further comprising:
in a case where the terminal determines that the configuration information exceeds a capability of the terminal, reducing and/or integrating, by the terminal, candidate cells related to the configuration information, and determining, by the terminal, candidate cell information to be measured and/or reserved, wherein the configuration information comprises the first configuration information and/or the second configuration information, or the configuration information comprises the third configuration information; and
sending, by the terminal, sixth information to the first network device, wherein the sixth information comprises the candidate cell information to be measured and/or reserved which is determined by the terminal, and the candidate cell information comprises CHO candidate cell information and/or CPAC candidate cell information.

32. An information processing apparatus, configured in a first network device, comprising a first communication module and a second communication module, wherein
the first communication module is configured to receive first information and/or second information sent by one or more second network devices, wherein the first information comprises first configuration information related to conditional handover (CHO), and the second information comprises second configuration information related to conditional primary secondary cell (PScell) addition/change (CPAC); and
the second communication module is configured to send the first configuration information and/or the second configuration information to a terminal, or third configuration information obtained after processing the first configuration information and/or the second configuration information to the terminal.

33. An information processing apparatus, configured in a second network device, comprising:
a third communication module, configured to send first information and/or second information to a first network device, wherein the first information comprises first configuration information related to conditional handover (CHO), the second information comprises second configuration information related to conditional primary secondary cell (PScell) addition/change (CPAC), and at least part of information among the first configuration information and/or the second configuration information is used to be configured for a terminal by the first network device.

34. An information processing apparatus, configured in a terminal, comprising a fourth communication module and a measurement module, wherein
the fourth communication module is configured to receive first configuration information related to conditional handover (CHO) and/or second configuration information related to conditional primary secondary cell (PScell) addition/change (CPAC) sent by a first network device, or third configuration information obtained after processing the first configuration information and/or the second configuration information which is sent by the first network device; and
the measurement module is configured to perform cell measurement based on the first configuration information and/or the second configuration information, or based on the third configuration information.

35. A computer-readable storage medium having a computer program stored thereon, wherein when the program is executed by a processor, steps of the method according to any one of claims 1-13 are implemented; or,
when the program is executed by the processor, steps of the method according to any one of claims 14-26 are implemented; or,
when the program is executed by the processor, steps of the method according to any one of claims 27-31 are implemented.

36. A communication device, comprising: a memory, a processor, and a computer program stored on the memory and executable by the processor, wherein when the processor executes the program, steps of the method according to any one of claims 1-13 are implemented; or,
when the processor executes the program, steps of the method according to any one of claims 14-26 are implemented; or,
when the processor executes the program, steps of the method according to any one of claims 27-31 are implemented.
